(19) Europäisches Patentamt European Patent Office Office européen des brevets

(11) **EP 3 356 282 B2**

(12) **NOUVEAU FASCICULE DE BREVET EUROPEEN**
Après la procédure d'opposition

(45) Date de publication et mention de la décision concernant l'opposition:
**30.07.2025 Bulletin 2025/31**

(45) Mention de la délivrance du brevet:
**20.07.2022 Bulletin 2022/29**

(21) Numéro de dépôt: **16787497.3**

(22) Date de dépôt: **30.09.2016**

(51) Classification Internationale des Brevets (IPC):
*B66F 9/065* (2006.01)  *E02F 9/22* (2006.01)
*B66F 9/075* (2006.01)  *B62D 6/00* (2006.01)
*B62D 6/02* (2006.01)  *E02F 9/20* (2006.01)

(52) Classification Coopérative des Brevets (CPC):
**B62D 6/002; B62D 6/02; B66F 9/0655;**
**B66F 9/07568; E02F 9/225;** E02F 9/2087

(86) Numéro de dépôt international:
**PCT/FR2016/052510**

(87) Numéro de publication internationale:
**WO 2017/055773 (06.04.2017 Gazette 2017/14)**

(54) **SYSTÈME DE MODIFICATION DU RAPPORT DE DIRECTION POUR VÉHICULE MUNI D'UN VOLANT DE DIRECTION ET VÉHICULE CORRESPONDANT**

SYSTEM ZUR ÄNDERUNG DER LENKÜBERSETZUNG FÜR EIN FAHRZEUG MIT EINEM LENKRAD UND ENTSPRECHENDES FAHRZEUG

SYSTEM FOR MODIFICATION OF THE STEERING RATIO FOR A VEHICLE PROVIDED WITH A STEERING WHEEL, AND CORRESPONDING VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.10.2015 FR 1559353**

(43) Date de publication de la demande:
**08.08.2018 Bulletin 2018/32**

(73) Titulaire: **MANITOU BF**
**44150 Ancenis (FR)**

(72) Inventeurs:
• **RIOT, Antoine**
**44150 Ancenis (FR)**
• **CHRISTINY, Mickaël**
**44150 Ancenis (FR)**

(74) Mandataire: **Ipsilon**
**Europarc - Bat B7**
**3, rue Edouard Nignon**
**44300 Nantes (FR)**

(56) Documents cités:
EP-A1- 1 236 638   DE-A1- 10 355 933
US-A1- 2005 209 752   US-B1- 6 244 373
US-B2- 6 542 801

EP 3 356 282 B2

**Description**

**DOMAINE DE L'INVENTION**

La présente invention concerne de manière générale un véhicule roulant comprenant un système de modification du rapport de direction.

**ART ANTERIEUR**

Pour la manutention d'objets entre deux zones, il est connu d'utiliser un véhicule de manutention que le conducteur déplace en braquant les roues dans un sens pour atteindre une première zone, par exemple afin de prendre un chargement. Pour atteindre une deuxième zone de déchargement, le conducteur doit reculer puis avancer le véhicule en braquant les roues dans l'autre sens.

Cependant, pour braquer les roues dans un sens ou dans l'autre, c'est-à-dire pour amener les roues en butée dans un sens ou dans l'autre, le conducteur doit appliquer au volant de direction plusieurs tours, ce qui se révèle fastidieux et coûteux en temps.

De manière générale, il est souhaitable de pouvoir diriger un tel véhicule de manutention de manière précise, confortable et sécurisée.

On connaît du document US6542801 B2 un système de direction qui détermine une vitesse cible de braquage des roues sur la base d'une vitesse de rotation du volant et qui modifie le rapport de la vitesse cible de braquage des roues sur la vitesse de rotation du volant en fonction de la vitesse d'avance du véhicule.

La présente invention a pour but de proposer un nouveau véhicule roulant permettant de palier à tout ou partie des problèmes exposés ci-dessus.

**RESUME DE L'INVENTION**

A cet effet, l'invention a pour objet un véhicule selon la revendication 1.

Le fait de pouvoir faire varier le rapport de direction en fonction de la vitesse angulaire du volant, permet d'adapter la sensibilité de la direction du véhicule aux conditions d'utilisation du véhicule.

En particulier, une telle conception permet de limiter le nombre de tour à appliquer au volant de direction pour amener les roues en butée dans un sens ou dans l'autre lorsque le conducteur souhaite braquer rapidement les roues.

Ainsi, on peut prévoir que le rapport soit diminué lorsque le volant est tourné rapidement pour que le conducteur puisse rapidement tourner les roues du véhicule avec un déplacement angulaire limité du volant. Inversement, lorsque le conducteur souhaite approcher précisément d'une zone et pour cela fait tourner lentement le volant, on peut prévoir que le rapport soit augmenté pour que le conducteur puisse conserver une précision de positionnement du véhicule.

Ledit module de commande est configuré pour diminuer le rapport de direction R lorsque la vitesse angulaire du volant augmente (en considérant que les éventuels autres paramètres de calcul du rapport restent inchangés).

Selon une caractéristique avantageuse de l'invention, le module de commande du rapport de direction est configuré de manière à calculer le rapport de direction aussi en fonction de la vitesse de déplacement du véhicule. Avantageusement, le rapport de direction augmente lorsque la vitesse du véhicule augmente.

Selon une caractéristique avantageuse de l'invention, ledit module de commande du rapport de direction R est configuré pour calculer le rapport de direction en fonction de la vitesse angulaire du volant lorsque la vitesse du véhicule est dans une plage de vitesse donnée, dite plage de faible vitesse, le calcul de rapport de direction étant indépendant de la vitesse angulaire du volant au-delà de cette plage de vitesse ou l'influence de la vitesse angulaire du volant sur le rapport de direction étant réduite au-delà pour une vitesse de véhicule au-delà de cette plage de faible vitesse.

Selon une caractéristique avantageuse de l'invention, ledit module de commande du rapport de direction R est configuré pour calculer le rapport de direction en fonction de la vitesse angulaire du volant lorsque la vitesse du véhicule est dans une plage de vitesse, dite de faible vitesse, de 0 à 10 km/h, préférentiellement de 0 à 8 km/h, par exemple de 0 à 5 km/h. On peut encore prévoir que cette plage soit limitée à la plage 0 à 2 ou 3 km/h.

Préférentiellement, le rapport de direction est indépendant de la vitesse angulaire du volant au-delà de cette plage de faible vitesse ou l'influence de la vitesse angulaire du volant sur le rapport de direction est réduite pour une vitesse de véhicule au-delà de cette plage de faible vitesse.

On peut prévoir que la modification de rapport en fonction de la vitesse angulaire du volant s'applique sur toute la plage de vitesse véhicule, par exemple de 0 à 40 km/h. Mais comme expliqué ci-dessus, cette modification du rapport de vitesse peut être limitée à une gamme de vitesses du véhicule pour inhiber ou réduire l'influence de la vitesse angulaire du volant hors de cette plage pour des questions de sécurité.

Le module de commande peut calculer le rapport de direction en fonction de paramètres supplémentaires, tels que d'autres paramètres de manipulation du volant. Selon une caractéristique avantageuse de l'invention, ledit paramètre de manipulation du volant comprend l'accélération angulaire du volant.

Selon une caractéristique avantageuse de l'invention, ledit paramètre de manipulation du volant comprend la position angulaire du volant et/ou la course angulaire parcourue continument.

Selon une caractéristique avantageuse de l'invention, la modification du rapport de direction R peut aussi être réalisée en fonction de la longueur du bras télescopique.

Selon une caractéristique avantageuse de l'invention, ledit système comprenant un capteur de charge configuré pour déterminer la charge à, ou au voisinage de, l'extrémité du bras télescopique, le module de commande du rapport de direction est configuré pour modifier le rapport de direction R en fonction de ladite charge déterminée.

Lors d'une opération de manutention de charge avec un véhicule à bras télescopique inclinable dont l'extrémité est destinée à porter une charge, il existe un risque de basculement du véhicule dans le cas où celui-ci n'est pas piloté de manière sécurisée. La modification du rapport de direction en fonction de paramètres liés au bras que sont l'angle et possiblement la longueur dudit bras, ou encore la charge en bout de bras, permet de conserver un confort de manœuvre du véhicule tout en assurant des conditions de sécurité adaptées.

Selon une caractéristique avantageuse de l'invention, le module de commande du rapport de direction est configuré de manière à modifier le rapport de direction en fonction aussi de l'enfoncement de la pédale d'accélération.

Selon une caractéristique avantageuse de l'invention, le dispositif de transmission de direction comprend un circuit hydraulique.

Selon une caractéristique avantageuse de l'invention, le circuit hydraulique comporte:

- une pompe, encore appelée pompe accessoire, permettant de mettre en pression le circuit hydraulique ;
- un système de vérin hydraulique couplé aux roues directrices ;
- une pompe de direction permettant de diriger le liquide de direction d'un côté ou de l'autre du ou de chaque vérin du système de vérin hydraulique en fonction de la rotation du volant ;
- un système d'ajout de débit, de préférence une électrovanne proportionnelle, commandable par le module de commande pour ajouter un débit supplémentaire de liquide de direction dans le circuit hydraulique en fonction du rapport de direction défini par le module de commande.

Selon une caractéristique avantageuse de l'invention, le véhicule comprend un premier calculateur configuré pour traiter les données issues du ou des capteurs et piloter les actionneurs électriques du véhicule, et un deuxième calculateur connecté au premier calculateur et qui comprend ledit module de commande du rapport de direction.

Selon une caractéristique avantageuse de l'invention, ledit véhicule comprend quatre roues directrices.

## BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :

- la figure 1 est une vue schématique de dessus d'un système de modification de rapport de direction pour un véhicule roulant, conformément à un mode de réalisation de l'invention ;
- la figure 2 est une vue schématique de côté d'un véhicule de manutention, conformément à un mode de réalisation de l'invention, le véhicule comprenant un bras télescopique équipé d'un godet qui est représenté à l'état détaché de l'extrémité du bras.
- la figure 3 est un graphique donnant un exemple de courbe du rapport de direction principal en fonction de la vitesse de déplacement du véhicule, conformément à un mode de réalisation de l'invention ;
- la figure 4 est un graphique donnant un exemple de courbe d'un facteur de correction pour le calcul du rapport de direction, en fonction de la vitesse angulaire du volant, conformément à un mode de réalisation de l'invention ;
- la figure 5 est un graphique donnant un exemple de courbe d'un facteur de correction pour le calcul du rapport de direction, en fonction de l'angle que fait le bras télescopique du véhicule avec le sol, conformément à un mode de réalisation de l'invention.

## DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments de véhicule peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier. L'étendue de l'invention est par conséquent définie par les revendications jointes. Les modes de réalisation qui suivent sont examinés, par souci de simplification, en relation avec la terminologie et la structure d'un véhicule roulant de manutention. Cependant, les modes de réalisation qui seront examinés ensuite ne sont pas limités à ces véhicules de manutention, mais peuvent être appliqués à d'autres véhicules roulant.

Une référence dans toute la description, à « un mode de réalisation » signifie qu'une fonctionnalité, une structure, ou une caractéristique particulière décrite en relation avec un mode de réalisation est inclue dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

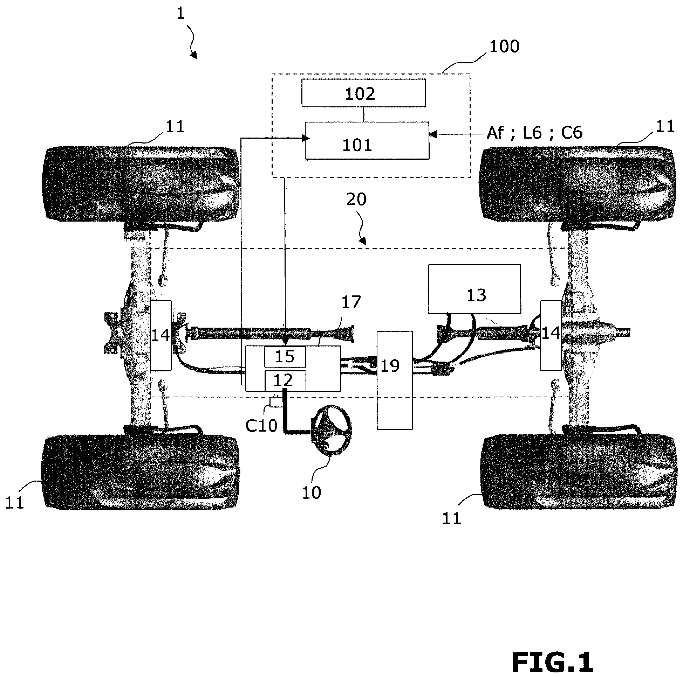

A la figure 1, on a représenté de manière schématique un véhicule roulant 1 qui comprend un volant 10 de direction et un capteur C10 de l'angle de direction du volant de manière à pouvoir calculer un paramètre représentatif de la manipulation du volant.

Le capteur C10 peut être agencé de manière à détecter l'angle de pivotement de la colonne de direction couplée au volant 10. Le capteur C10 permet de déterminer la vitesse angulaire du volant par dérivation de l'angle de pivotement.

Le capteur C10 est connecté à un calculateur 101 de gestion des organes du véhicule. L'acquisition de l'angle de pivotement du volant 10 en fonction du temps permet au calculateur 101, ou à un autre calculateur 102 raccordé audit calculateur 101, de calculer la position angulaire, la vitesse angulaire (ou vitesse de pivotement), l'accélération angulaire ou encore la course angulaire parcourue continument par le volant.

Dans l'exemple illustré aux figures, le véhicule roulant comprend quatre roues directrices. En variante, on peut prévoir que seules les roues avant du véhicule soient directrices. Au moins deux roues sont motrices. Les quatre roues peuvent être motrices de manière à permettre aux roues d'être dirigées selon une configuration en crabe pour pouvoir approcher précisément une zone donnée.

Le véhicule comprend un dispositif 20 de transmission de direction permettant de transmettre le mouvement de direction entre le volant 10 et les roues directrices 11. Ce mouvement est transmis selon un rapport de direction donné R, encore appelé rapport de direction. Le rapport de direction est défini par R = Alpha / Beta avec Beta l'angle de braquage des roues, et Alpha l'angle de braquage du volant.

Ainsi, lorsque le volant 10 est tourné d'un angle Alpha, le dispositif de transmission de direction fait pivoter les roues directrices 11 de l'angle Beta défini par le rapport de direction R.

Comme détaillé ci-après, le véhicule comprend un module de commande 102 du rapport de direction R. Le module de commande 102 du rapport de direction est configuré pour calculer (ou modifier) le rapport de direction en fonction de la vitesse angulaire du volant 10. Comme expliqué ci-dessus la vitesse angulaire peut être calculée à l'aide du capteur angulaire C10.

Le dispositif 20 de transmission de direction forme ainsi avec le module de commande 102 du rapport de direction du calculateur, un système de démultiplication de direction variable permettant de faire varier le rapport entre l'angle de volant et l'angle de roue.

Le module de commande 102 du rapport de direction R est configuré de telle sorte que le rapport de direction R diminue lorsque la vitesse angulaire Va du volant augmente.

On peut considérer que la vitesse angulaire Va du volant est comprise dans la plage [0 ; Va_max] avec Va_max égal à 2 à 4 tours par seconde, préférentiellement 2,5 tours par seconde.

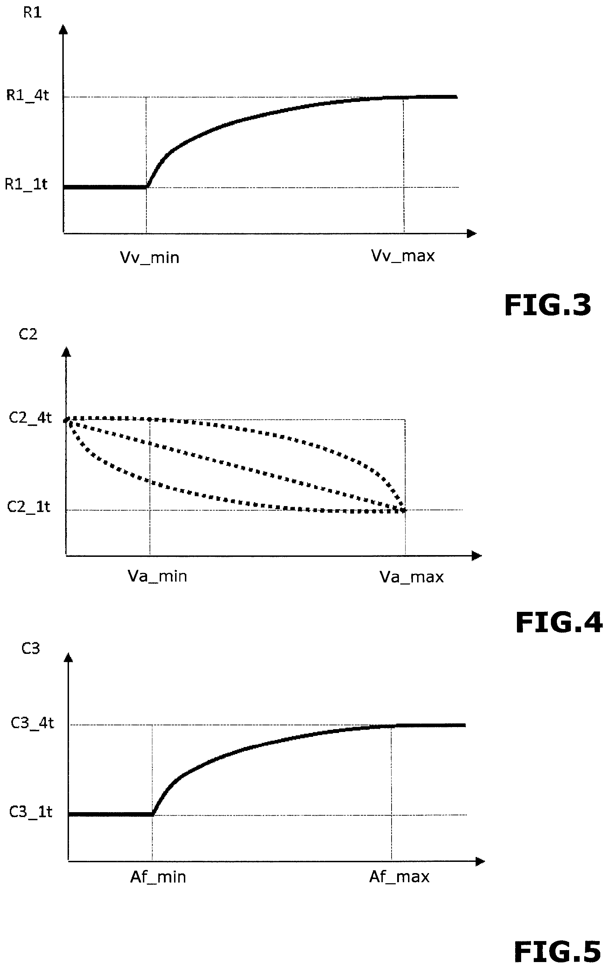

On peut ainsi prévoir que le rapport de direction appliqué soit du type R= C2. Dans l'exemple de la figure 4, la valeur de C2 décroit depuis une valeur C2_4t, pour une vitesse angulaire de volant égale à 0, jusqu'à une valeur C2_1t, pour une vitesse angulaire de volant égale à Va_max. Dans ce cas, la valeur C2_1t correspond à la nécessité d'effectuer un tour de volant pour braquer les roues d'un côté à l'autre, tandis que la valeur C2_4t correspond à la nécessité d'effectuer 4 tours de volant pour braquer les roues d'un côté à l'autre.

Une telle configuration du module de commande permet d'améliorer la précision de positionnement du véhicule, notamment lorsque le véhicule est à vitesse réduite ou nulle, et que le conducteur tourne lentement le volant pour déplacer précisément le véhicule, tout en facilitant la manœuvre du véhicule lorsque le conducteur tourne rapidement le volant pour notamment changer de direction, afin de se déplacer d'une zone à un autre, la vitesse du véhicule restant réduite.

Autrement dit, en considérant que les éventuels autres paramètres de calcul sont inchangés, le rapport de direction est élevé lorsque la vitesse de pivotement du volant est faible, et est plus faible lorsque la vitesse de pivotement est plus importante. La valeur du rapport de direction est aussi déterminée en fonction d'un ou plusieurs autres paramètres, tels que la vitesse de déplacement du véhicule comme détaillé ci-après.

Préférentiellement, le module de commande 102 du rapport de direction R est configuré de manière à modifier le rapport de direction R en tenant compte aussi de la vitesse de déplacement du véhicule. La vitesse de déplacement du véhicule peut être transmise au module de commande 102 par le calculateur 101 du véhicule.

En particulier, on peut prévoir que le rapport de direction R à appliquer soit calculé sur la base d'un rapport de direction, dit principal ou standard, noté R1 qui est fonction de la vitesse du véhicule Vv, auquel est appliquée la valeur C2 en tant que facteur de correction qui est fonction de la vitesse angulaire du volant. On peut à titre d'exemple fixer la valeur C2_1t à 1 et la valeur C2_4t à 4.

Autrement dit, on peut prévoir que le rapport de direction R à appliquer soit calculé avec une formule du type :

$$R = R1 * C2$$

Dans l'exemple illustré à la figure 3, qui est un graphique donnant la courbe du rapport de direction principal, noté R1, en fonction de la vitesse de déplacement du véhicule, notée Vv, le rapport de direction principal R1 est maintenu à une valeur constante (la valeur minimale R1_1t), de 0 km/h (arrêt du véhicule) jusqu'à une valeur de vitesse donnée, notée Vv_min. Dans l'exemple illustré, la valeur minimale R1_1t correspond au fait que le conducteur doit effectuer seulement un tour de volant pour braquer les roues en butée d'un côté à l'autre.

Au-delà de la vitesse Vv_min, la valeur de R1 augmente jusqu'à atteindre pour Vv_max une valeur maximale R1_4t correspondant dans l'exemple illustré au fait de devoir faire 4 tours de volant pour braquer les roues en butée d'un côté à l'autre. Dans l'exemple de la figure 3, la courbe de R1 est de type logarithmique à partir de Vv_min. Bien entendu d'autres allures de courbe peuvent être envisagées.

Selon ce mode de réalisation, en reprenant le graphique de la figure 4 qui donne la courbe du coefficient de correction C2, en fonction de la vitesse angulaire du volant, notée Va, le coefficient de correction C2 diminue lorsque la vitesse angulaire Va du volant augmente. La décroissance peut être linéaire ou non (notamment de forme concave ou convexe) comme l'illustrent les différentes allures de courbes représentées en pointillé.

Le module de commande calcule alors le rapport de direction R à appliquer en corrigeant le rapport de direction R1 principal défini en fonction de la vitesse Vv du véhicule (figure 3) par le coefficient de correction C2 qui est défini en fonction de la vitesse angulaire du volant (figure 4).

Ainsi, à l'arrêt ou à très faible vitesse, c'est-à-dire pour une vitesse du véhicule inférieure à Vv_min, et lorsque le conducteur tourne lentement son volant, par exemple pour une valeur Va inférieure à Va_min, le rapport de direction R est calculé en corrigeant la valeur de R1 (qui est alors proche de ou égale à R1_1t, ce qui correspond à une nécessité d'effectuer seulement 1 tour de volant pour braquer les roues en butée d'un côté à l'autre), à l'aide du facteur de correction C2 (dont la valeur proche de C2_4t est importante, par exemple égale à 4, du fait de la lente vitesse de pivotement du volant).

La valeur de Va_min peut être comprise entre 0 et 2 tours par seconde, préférentiellement entre 0 et 1tours par seconde, ou entre 0.1 et 0.5 tours par seconde. A titre d'exemple on peut choisir Va_min comprise entre 0 et 0.2 tour par seconde.

Le calculateur effectue l'opération R= R1* C2, c'est-à-dire R = R1_1t * 4.

Inversement, lorsque, à l'arrêt ou à très faible vitesse, c'est-à-dire pour une vitesse du véhicule inférieure à Vv_min, et lorsque le conducteur tourne rapidement son volant, par exemple pour une valeur Va supérieure à Va_min et proche de Va_max, le rapport de direction R est calculé en corrigeant la valeur de R1 (qui est alors proche de ou égale à R1_1t, ce qui correspond à une nécessité d'effectuer seulement 1 tour de volant pour braquer les roues en butée d'un côté à l'autre), à l'aide du facteur de correction C2 (dont la valeur proche de C2_1t est faible, par exemple égale à 1, du fait de la forte vitesse de pivotement du volant).

Le calculateur effectue l'opération R= R1* C2, c'est-à-dire R = R1_1t * 1 de sorte que la valeur rapport de direction à appliquer correspond à la nécessité d'effectuer 1 tour de volant pour braquer les roues en butée d'un côté et de l'autre.

Ainsi, l'opérateur peut, en tournant rapidement le volant, manœuvrer rapidement pour effectuer à faible vitesse des trajets d'un point à un autre, ce qui est particulièrement utile dans le cas d'un chargement ou déchargement entre deux zones proches. En effet, il n'a pas besoin d'effectuer un grand nombre de tour de volant pour manœuvrer son véhicule. A l'inverse il peut manier précisément le véhicule en pivotant doucement le volant pour se positionner correctement devant la zone souhaitée.

A haute vitesse, R1 se rapproche de la valeur R1_4t qui est supérieure à R1_1t, ce qui permet d'augmenter la valeur du rapport de direction R à appliquer et ainsi d'augmenter le déplacement angulaire du volant à effectuer pour braquer les roues, ce qui améliore la sécurité de conduite.

Selon un mode de réalisation l'influence de la vitesse angulaire sur le rapport de direction est réduite, voire annulée, au-delà d'une vitesse de déplacement donnée pour privilégier la sécurité.

Dans l'exemple de la figure 4, la courbe C2 décroit, lorsque la vitesse angulaire du volant augmente, entre une valeur maximale C2_4t correspondant à une nécessité d'effectuer un plus grand déplacement angulaire, par exemple 4 tours, de volant pour braquer les roues d'un côté et de l'autre et une valeur C2_1t correspondant à une nécessité d'effectuer un plus petit déplacement angulaire, par exemple 1 tour de volant, pour braquer les roues d'un côté et de l'autre. Une telle conception du module de commande du rapport de direction permet de conserver, à haute vitesse de déplacement du véhicule, une direction plus raide et moins sensible afin de préserver le confort et la sécurité de pilotage du véhicule, tout en permettant à vitesse réduite du véhicule de bénéficier d'un fort rapport de direction à faible vitesse angulaire du volant et d'un plus faible rapport de direction à haute vitesse angulaire du volant.

On peut prévoir que la prise en compte du facteur de correction C2 s'applique sur toute la plage de vitesse de déplacement du véhicule ou sur une partie seulement.

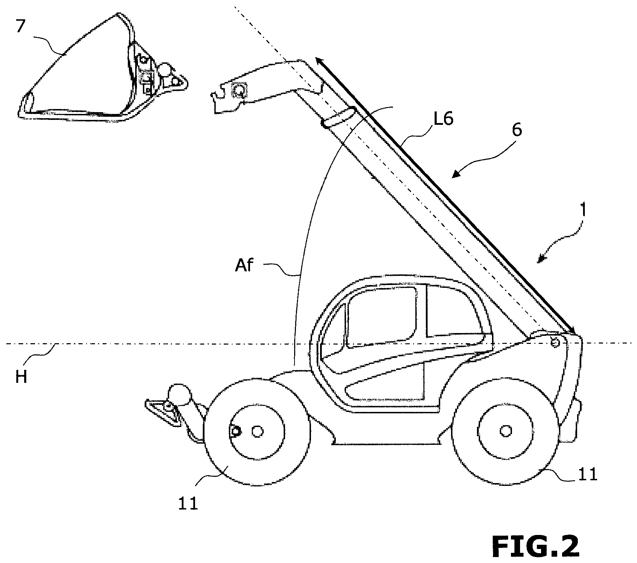

Comme illustré à la figure 2, le véhicule est de type à bras télescopique. Le châssis du véhicule 1 porte un bras télescopique 6 articulé autour d'un axe sensiblement horizontal. Dans l'exemple illustré à la figure 2, le bras télescopique 6 est destiné à être équipé à son extrémité distale d'un godet 7. Le bras télescopique 6 est élevé ou abaissé en étant incliné selon un angle Af par rapport au plan horizontal H. Le bras télescopique 6 peut s'étendre ou se rétracter. Le bras présente alors une longueur L6. La longueur L6 et l'angle Af du bras télescopique sont mesurés par des capteurs raccordés à un calculateur du véhicule.

Le module de commande 102 du rapport de direction R est configuré pour modifier le rapport de direction R en fonction de l'angle, appelé angle de flèche Af, formé par le bras télescopique avec le plan d'appui au sol des roues du véhicule. La suite de la description décrit une prise en compte de l'angle de flèche pour le calcul du rapport de direction mais s'applique aussi à la prise en compte d'un autre paramètre relatif au bras télescopique, tel que sa longueur ou sa charge en bout de bras.

Le module de commande 102 du rapport de direction R est configuré de manière à calculer le rapport de direction R aussi en fonction de la valeur de l'angle de flèche Af de manière à augmenter le rapport de direction lorsque l'angle de flèche augmente (lorsque l'on considère les autres paramètres comme inchangés).

Ainsi, selon un mode de réalisation le rapport de direction R à appliquer est calculé par la formule :

$$R = R1 * C2 * C3$$

C2 est le facteur de correction fonction de la valeur angulaire du volant. C2 décroit depuis la valeur C2_4t, par exemple égale à 4, lorsque la valeur de vitesse de volant Va est nulle, jusqu'à la valeur C2_1t, par exemple égale à, lorsque la valeur de vitesse de volant Va est maximale.

C3 est un facteur de correction fonction de la valeur angulaire de la flèche. Dans l'exemple de la figure 5, la valeur du facteur de correction C3 croit depuis une valeur C3_1t, par exemple égale à 1, pour une valeur d'angle de flèche donné Af_min, appelé angle de flèche minimal, jusqu'à une valeur C3_4t, par exemple égale à 4, pour la valeur d'angle de flèche maximale Af_max qui est comprise par exemple entre 30 et 45 °, préférentiellement 35°. On peut prévoir que Af_min soit compris entre 5° et 25°, par exemple 15°.

Dans l'exemple de la figure 5, la valeur du facteur de correction est constante lorsque la valeur d'angle de flèche est comprise entre 0 et Af_min. Dans l'exemple de la figure 5, la courbe de C3 est de type logarithmique à partir de Af_min. Bien entendu d'autres allures de courbe peuvent être envisagées.

Ainsi, la prise en compte de l'angle de flèche permet d'augmenter la valeur du rapport de direction lorsque l'angle dépasse la valeur Af_min, ce qui permet d'améliorer encore la sécurité de manœuvre du véhicule, en évitant un renversement dudit véhicule.

De manière similaire à la prise en compte du facteur de correction C2, on peut prévoir que la prise en compte du facteur de correction C3 s'applique sur toute la plage de vitesse du véhicule ou sur une partie seulement. Les plages de prise en compte des coefficients de correction C2 et C3 peuvent ou non se recouvrir, totalement ou partiellement.

Avantageusement, le rapport de direction R est aussi modifié en fonction de la longueur L6 du bras télescopique. Le plan d'appui au sol des roues du véhicule est usuellement le plan horizontal.

On peut aussi prévoir que le rapport de direction soit augmenté lorsque la longueur du bras et/ou la charge augmente pour réduire le risque de renversement du véhicule.

Avantageusement, le véhicule comprend aussi un capteur de charge C6 configuré pour déterminer la charge à, ou au voisinage de, l'extrémité du bras 6 télescopique. Le module de commande 102 du rapport de direction est alors configuré pour modifier le rapport de direction R en fonction de ladite charge déterminée, ce qui permet d'augmenter le rapport de direction en cas de charge supérieure à une valeur seuil.

Le véhicule comprend un système de traitement et de calcul électronique et/ou informatique 100 qui comprend le premier calculateur 101 configuré pour traiter les données issues des capteurs et piloter les actionneurs électriques du véhicule. Un deuxième calculateur 102 est connecté au premier calculateur 101. Ledit module de commande du rapport de direction est implémenté dans ledit deuxième calculateur 102. En variante, ledit premier calculateur et le deuxième calculateur peuvent être réalisés sous la forme d'une même unité de traitement électronique et/ou informatique, c'est-à-dire sous la forme d'un même calculateur.

Le dispositif 20 de transmission de direction est de type hydraulique. Selon un mode de réalisation illustré la figure 1, le dispositif 20 de transmission de direction comprend un circuit de direction hydraulique mis en pression par une pompe 19, encore appelée pompe accessoire. Le dispositif 20 de transmission de direction comprend un système de vérin hydraulique 14 couplés aux roues directrices 11. Le système de vérin hydraulique comprend des vérins hydrauliques permettant de diriger les roues dans un sens ou un autre et d'un angle de direction donné en fonction de la rotation du volant. Dans l'exemple illustré aux figures, les roues avant et les roues arrière sont directrices de sorte que le système de vérin comprend deux vérins. En variante, lorsque seules les roues avant sont directrices on peut prévoir que le système de vérin comprend un seul vérin.

Le véhicule comprend aussi un distributeur hydraulique 13, qui forme une vanne de priorité, afin de garantir un débit disponible suffisant dans le circuit hydraulique de direction par rapport aux autres fonctions hydrauliques accessoires.

Une pompe de direction 12, formée par une vanne 3-voies, est couplée au volant 10 de manière à délivrer un débit de liquide de direction, fourni par la pompe accessoire 19, en fonction de la rotation du volant, de préférence aussi en fonction de la vitesse du véhicule et en fonction de l'angle de flèche. La pompe de direction 12 dirige le liquide de direction délivré par la pompe accessoire 19 d'un côté ou de l'autre de chacun des vérins 14 en fonction du sens de pivotement du volant 10.

Le véhicule comprend aussi une électrovanne proportionnelle 15 commandable par le module de commande 102 pour commander l'ajout d'un débit de liquide de direction supplémentaire dans le circuit hydraulique en fonction du rapport de direction défini par le module de commande.

L'électrovanne proportionnelle peut être logée avec la pompe de direction au sein d'un même boîtier 17 appelé orbitrol, ou être disposée à un autre endroit sur le circuit hydraulique entre la pompe de direction et le système de vérin.

Ainsi, selon un mode de réalisation particulier, le capteur de position angulaire permet au système de traitement et de calcul 100 de mesurer la vitesse angulaire du volant. Le module de commande 102 détermine alors le rapport de direction à appliquer en fonction de ladite vitesse et commande alors, par exemple par l'intermédiaire du calculateur 101 de gestion du véhicule, l'activation de l'électrovanne proportionnelle de manière à injecter dans le système de vérins hydrauliques 14 un débit de liquide correspondant au rapport de direction calculé. Préférentiellement, le module de commande 102 détermine aussi le rapport de direction à appliquer en fonction de la vitesse du véhicule et en fonction de l'angle de flèche.

On peut prévoir que le véhicule comprend des moyens d'inactivation permettant d'inactiver le module de commande 102 du rapport de direction de sorte que le rapport de direction est le rapport de direction défini par défaut. Par exemple l'inactivation peut être commandée suite à la détection d'un dysfonctionnement du véhicule.

Le système de traitement et de calcul, ou encore le ou chaque calculateur, peut être réalisé sous la forme de composants électroniques et/ou d'un processeur informatique, par exemple de type microprocesseur ou microcontrôleur. Le module de commande du rapport de direction peut alors être réalisé sous la forme de programmes implémentés qui comprennent des instructions informatiques permettant de réaliser leur fonction, ou sous la forme de composant électroniques dédiés.

Ces programmes d'ordinateur, ou instructions informatiques, peuvent être contenus dans des dispositifs de stockage de programme, par exemple des supports de stockage de données numériques lisibles par ordinateur, ou des programmes exécutables. Les programmes ou instructions peuvent aussi être exécutés à partir de périphériques de stockage de programme.

Avantageusement, on peut prévoir que le rapport de direction puisse atteindre ou être fixé à une certaine valeur jusqu'à une vitesse donnée de déplacement du véhicule, puis d'augmenter le rapport de direction R à mesure que la vitesse de déplacement augmente pour tendre vers un rapport de direction par défaut. On entend par rapport de direction par défaut le rapport de direction qui résulte de la construction du véhicule sans activation du module de commande du rapport. Une telle conception facilite la manœuvre du véhicule à l'arrêt ou à faible vitesse de déplacement, tout en conservant une sécurité et un confort de conduite à plus haute vitesse pour limiter la nervosité du véhicule.

On remarquera que le rapport de direction est défini par convention comme étant égal à Alpha / Beta mais le rapport de direction pourrait en variante être défini comme étant égal à Beta/Alpha, ce qui ne change pas le fait que le rapport de direction est modifié en fonction de la vitesse angulaire du volant. Bien entendu, les formules de calcul du rapport de direction selon les différents modes de réalisation doivent alors être adaptées à la convention retenue.

L'invention n'est pas limitée aux modes de réalisation illustrés dans les dessins. En conséquence, il doit être entendu que, lorsque les caractéristiques mentionnées dans les revendications annexées sont suivies par des signes de référence, ces signes sont inclus uniquement dans le but d'améliorer l'intelligibilité des revendications et ne sont nullement limitatifs de la portée des revendications.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Véhicule roulant comprenant des roues directrices (11), un volant (10) de direction et un dispositif (20) de transmission de direction permettant de transmettre le mouvement de direction entre le volant (10) et les roues directrices (11) selon un rapport de direction R = Alpha / Beta, avec Alpha l'angle de braquage du volant, et Beta l'angle de braquage des roues, ledit véhicule comprenant un bras (6) télescopique inclinable,

   **caractérisé en ce que** ledit véhicule comprend un système de modification du rapport de direction qui comprend un dispositif de détermination de la vitesse angulaire du volant, et un module de commande (102) du rapport de direction R configuré pour calculer le rapport de direction en fonction de la vitesse angulaire (Va) du volant (10),
   et **en ce que** le module de commande (102) du rapport de direction R est configuré pour diminuer le rapport de direction R lorsque la vitesse angulaire (Va) du volant augmente ;
   et le système comprenant un capteur de l'angle (Af) formé par le bras télescopique avec le plan d'appui au sol des roues du véhicule, le module de commande (102) du rapport de direction (R) est configuré de manière à calculer le rapport de direction (R) aussi en fonction de la valeur de l'angle, appelé angle de flèche (Af), formé par le bras télescopique avec le plan d'appui au sol des roues du véhicule, de manière à augmenter le rapport de direction lorsque l'angle de flèche augmente.

**2.** Véhicule selon la revendication 1, **caractérisé en ce que** le module de commande (102) du rapport de direction (R) est configuré de manière à calculer le rapport de direction (R) aussi en fonction de la vitesse de déplacement (Vv) du véhicule.

**3.** Véhicule selon l'une des revendications précédentes, **caractérisé en ce que** ledit module de commande (102) du rapport de direction R est configuré pour calculer le rapport de direction en fonction de la vitesse angulaire du volant (10) lorsque la vitesse du véhicule est dans une plage de vitesse donnée, dite plage de faible vitesse, le rapport de direction étant indépendant de la vitesse angulaire du volant au-delà de cette plage de faible vitesse ou l'influence de la vitesse angulaire du volant (10) sur le rapport de direction étant réduite pour une vitesse de véhicule au-delà de cette plage de faible vitesse.

**4.** Véhicule selon l'une des revendications précédentes, **caractérisé en ce que** ledit module de commande (102) du rapport de direction R est configuré pour calculer le rapport de direction en fonction de la vitesse angulaire du volant (10) lorsque la vitesse du véhicule est dans une plage de vitesse de 0 à 10 km/h, préférentiellement de 0 à 8 km/h, par exemple de 0 à 5 km/h.

**5.** Véhicule selon l'une des revendications précédentes, **caractérisé en ce que**, ledit système comprenant un capteur de charge configuré pour déterminer la charge à, ou au voisinage de, l'extrémité du bras (6) télescopique, le module de commande (102) du rapport de direction est configuré pour modifier le rapport de direction R en fonction de ladite charge déterminée.

**6.** Véhicule selon l'une des revendications précédentes, **caractérisé en ce que** le module de commande (102) du rapport de direction (R) est configuré de manière à modifier le rapport de direction (R) en fonction aussi de l'enfoncement de la pédale d'accélération.

**7.** Véhicule selon l'une des revendications précédentes, **caractérisé en ce que** le dispositif (20) de transmission de direction comprend un circuit hydraulique.

**8.** Véhicule selon la revendication 7, **caractérisé en ce que** le circuit hydraulique comporte :

- une pompe (19), encore appelée pompe accessoire, permettant de mettre en pression le circuit hydraulique ;
- un système de vérin hydraulique (14) couplé aux roues directrices (11) ;
- une pompe de direction (12) permettant de diriger le liquide de direction d'un côté ou de l'autre du ou de chaque vérin du système de vérin hydraulique (14) en fonction de la rotation du volant ;
- un système d'ajout de débit, de préférence une électrovanne proportionnelle (15), commandable par le module de commande (102) pour ajouter un débit supplémentaire de liquide de direction dans le circuit hydraulique en fonction du rapport de direction défini par le module de commande.

**Patentansprüche**

**1.** Rollendes Fahrzeug, umfassend Führungsräder (11), ein Lenkrad (10) und eine Vorrichtung (20) zur Übertragung der Richtung, die ermöglicht, die Richtungsbewegung zwischen dem Lenkrad (10) und den Führungsrädern (11) gemäß einer Richtungsbeziehung R = Alpha/Beta zu übertragen, wobei Alpha der Lenkwinkel des Lenkrads ist und Beta der Lenkwinkel der Räder ist, wobei das Fahrzeug einen neigbaren teleskopischen Arm (6) umfasst,

dadurch gekennzeichnet, dass das Fahrzeug ein System zur Modifizierung der Richtungsbeziehung umfasst, das eine Vorrichtung zum Bestimmen der Winkelgeschwindigkeit des Lenkrads und ein Modul (102) zur Steuerung der Richtungsbeziehung R umfasst, das konfiguriert ist, um die Richtungsbeziehung in Funktion der Winkelgeschwindigkeit (Va) des Lenkrads (10) zu berechnen, und dadurch, dass das Modul (102) zur Steuerung der Richtungsbeziehung R konfiguriert ist, um die Richtungsbeziehung R zu verringern, wenn sich die Winkelgeschwindigkeit (Va) des Lenkrads erhöht, und wobei das System einen Winkelsensor (Af) umfasst, gebildet aus dem teleskopischen Arm mit der Auflageebene am Boden der Räder des Fahrzeugs, wobei das Modul (102) zur Steuerung der Richtungsbeziehung (R) konfiguriert ist, um die Richtungsbeziehung (R) auch in Funktion des Werts des Winkels, bezeichnet als Pfeilwinkel (Af), zu berechnen, gebildet aus dem teleskopischen Arm mit der Auflageebene am Boden der Räder des Fahrzeugs, um die Richtungsbeziehung zu erhöhen, wenn sich der Pfeilwinkel erhöht.

**2.** Fahrzeug nach Anspruch 1, **dadurch gekennzeichnet, dass** das Modul (102) zur Steuerung der Richtungsbeziehung (R) konfiguriert ist, um die Richtungsbeziehung (R) auch in Funktion der Fahrgeschwindigkeit (Vv) des Fahrzeugs zu berechnen.

**3.** Fahrzeug nach einem der vorhergehenden Ansprüche, **dadurch gekennzeichnet, dass** das Modul (102) zur Steuerung der Richtungsbeziehung R konfiguriert ist, um die Richtungsbeziehung in Funktion der Winkelgeschwindigkeit des Lenkrads (10) zu berechnen, wenn sich die Geschwindigkeit des Fahrzeugs in einem gegebenen Geschwindigkeitsbereich, bezeichnet als Bereich geringer Geschwindigkeit, befindet, wobei die Richtungsbeziehung unabhängig von der Winkelgeschwindigkeit des Lenkrads über diesen Bereich geringer Geschwindigkeit hinaus ist, oder wobei der Einfluss der Winkelgeschwindigkeit des Lenkrads (10) auf die Richtungsbeziehung bei einer Geschwindigkeit des Fahrzeugs über diesem Bereich geringer Geschwindigkeit hinaus reduziert ist.

**4.** Fahrzeug nach einem der vorhergehenden Ansprüche, **dadurch gekennzeichnet, dass** das Modul (102) zur Steuerung der Richtungsbeziehung R konfiguriert ist, um die Richtungsbeziehung in Funktion der Winkelgeschwindigkeit des Lenkrads (10) zu berechnen, wenn sich die Geschwindigkeit des Fahrzeugs in einem Geschwindigkeitsbereich von 0 bis 10 km/h befindet, vorzugsweise von 0 bis 8 km/h, z. B. von 0 bis 5 km/h.

**5.** Fahrzeug nach einem der vorhergehenden Ansprüche, **dadurch gekennzeichnet, dass** das System einen Lastsensor umfasst, der konfiguriert ist, um die Last an oder in der Nähe des Endes des teleskopischen Arms (6) zu bestimmen, wobei das Modul (102) zur Steuerung der Richtungsbeziehung konfiguriert ist, um die Richtungsbeziehung R in Funktion der bestimmten Last zu modifizieren.

**6.** Fahrzeug nach einem der vorhergehenden Ansprüche, **dadurch gekennzeichnet, dass** das Modul (102) zur Steuerung der Richtungsbeziehung (R) konfiguriert ist, um die Richtungsbeziehung (R) auch in Funktion des Drückens des Beschleunigungspedals zu modifizieren.

**7.** Fahrzeug nach einem der vorhergehenden Ansprüche, **dadurch gekennzeichnet, dass** die Vorrichtung (20) zur Übertragung der Richtung einen hydraulischen Kreislauf umfasst.

**8.** Fahrzeug nach Anspruch 7, **dadurch gekennzeichnet, dass** der hydraulische Kreislauf Folgendes umfasst:

   - eine Pumpe (19), auch bezeichnet als Zusatzpumpe, die ermöglicht, den hydraulischen Kreislauf unter Druck zu setzen;
   - ein hydraulisches Zylindersystem (14), das mit den Führungsrädern (11) gekoppelt ist;
   - eine Richtungspumpe (12), die ermöglicht, die Richtungsflüssigkeit von einer oder der anderen Seite des oder jedes Zylinders des hydraulischen Zylindersystems (14) in Funktion der Drehung des Lenkrads zu richten;
   - ein System des Hinzufügens von Durchsatz, vorzugsweise ein proportionales Elektromagnetventil (15), das durch das Steuerventil (102) gesteuert werden kann, um einen zusätzlichen Durchsatz von Richtungsflüssigkeit in den hydraulischen Kreislauf in Funktion des Richtungsbeziehung hinzuzufügen, die vom Steuermodul definiert wird.

**Claims**

**1.** Wheeled vehicle comprising steered wheels (11), a steering wheel (10), and a steering transmission device (20) serving to transmit the steering movement between the steering wheel (10) and the steered wheels (11) with a steering ratio R = Alpha/Beta, where Alpha is the turning angle of the steering wheel, and Beta is the steering angle of the wheels, said vehicle comprising a tiltable telescopic boom arm (6),

   **characterized in that** said vehicle comprises a system for modifying the steering ratio comprising a device for determining the angular speed of the steering wheel, and a control module (102) for controlling the steering ratio R that is configured to calculate the steering ratio as a function of the angular speed (Va) of the steering wheel (10),
   and **in that** said module (102) for controlling the steering ratio R is configured to reduce the steering ratio R when the angular speed (Va) of the steering wheel increases;
   and the system comprising an angle sensor (Af) for sensing the angle formed between the telescopic arm and the bearing plane of the wheels of the vehicle on the ground, the module (102) for controlling the steering ratio (R) is configured so as to calculate the steering ratio (R) also as a function of the value of the angle, referred to as the boom angle (Af), formed between the telescopic arm and the bearing plane of the wheels of the vehicle on the ground, so as to increase the steering ratio when the boom angle increases.

**2.** Vehicle according to Claim 1, **characterized in that** said module (102) for controlling the steering ratio (R) is configured to calculate the steering ratio (R) also as a function of the travel speed (Vv) of the vehicle.

**3.** Vehicle according to one of the preceding claims, **characterized in that** said module (102) for controlling the steering ratio R is configured to calculate the steering ratio as a function of the angular speed of the steering wheel (10) when the speed of the vehicle is in a given speed range, called low speed range, the steering ratio being independent of the angular speed of the steering wheel beyond this low speed range, or the influence of the angular speed of the steering wheel (10) on the steering ratio being reduced for a vehicle speed beyond this low speed range.

4. Vehicle according to one of the preceding claims, **characterized in that** said module (102) for controlling the steering ratio R is configured to calculate the steering ratio as a function of the angular speed of the steering wheel (10) when the speed of the vehicle is in a speed range of 0 to 10 km/h, preferably of 0 to 8 km/h, for example of 0 to 5 km/h.

5. Vehicle according to one of the preceding claims, **characterized in that**, said system comprising a load sensor configured to determine the load at, or in the vicinity of, the end of the telescopic arm (6), the module (102) for controlling the steering ratio is configured to modify the steering ratio R as a function of said determined load.

6. Vehicle according to one of the preceding claims, **characterized in that** the module (102) for controlling the steering ratio (R) is configured so as to modify the steering ratio (R) also as a function of accelerator pedal depression.

7. Vehicle according to one of the preceding claims, **characterized in that** the steering transmission device (20) comprises a hydraulic circuit.

8. Vehicle according to Claim 7, **characterized in that** the hydraulic circuit includes:

   - a pump (19), also called "integral pump," allowing pressurization of the hydraulic circuit;
   - a hydraulic valve system (14) coupled to the steered wheels (11);
   - a steering pump (12) allowing the steering fluid to be directed toward one side or the other of the or each valve of the hydraulic valve system (14) as a function of the turning of the steering wheel;
   - a system for increasing flow rate, preferably a proportional solenoid valve (15), that can be controlled by the control module (102) to cause additional steering fluid flow to be added into the hydraulic circuit as a function of the steering ratio defined by the control module.

**FIG.1**

**FIG.2**

**FIG.3**

**FIG.4**

**FIG.5**

**EP 3 356 282 B2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6542801 B2